# EUROPEAN PATENT APPLICATION

(11) **EP 4 517 994 A1**
(43) Date of publication of application: **05.03.2025**
(21) Application number: 24792856.7
(22) Date of filing: 19.03.2024
(51) Int. Cl.: H01M 50/417, H01M 50/489, H01M 10/052, H01M 10/0525, C08J 9/26, H01M 50/463

(54) **SEPARATOR FOR ELECTROCHEMICAL DEVICE AND ELECTROCHEMICAL DEVICE COMPRISING SAME**

(30) Priority: 19.04.2023 KR 20230051176; 28.04.2023 KR 20230055916; 22.05.2023 KR 20230065754
(71) Applicant: LG Energy Solution, Ltd., Seoul 07335 (KR)
(72) Inventor: LEE, So Yeong, Daejeon 34122 (KR); BAE, Won Sik, Daejeon 34122 (KR); KWON, Su Jee, Daejeon 34122 (KR); BAE, Kyeong Hui, Daejeon 34122 (KR); BAK, Byeong Chan, Daejeon 34122 (KR)
(74) Representative: Hoffmann Eitle
(86) International application number: PCT/KR2024/003422
(87) International publication number: WO 2024/219669

(57) **Abstract**

The present disclosure provides a separator for an electrochemical device, and an electrochemical device including the separator, in which the compression resistance and the insulation breakdown voltage of the separator can be improved by selecting a specific type of polymer resin to be included in a porous polymer substrate and adjusting the polydispersity index and the weight-average molecular weight of a polymer eluted at a high temperature, the content of a fraction eluted at a specific temperature, and the indentation depth.

## Description

### [TECHNICAL FIELD]

This application is based on and claims priority from Korean Patent Application Nos. 10-2023-0051176, 10-2023-0055916, and 10-2023-0065754, filed on April 19, 2023, April 28, 2023, and May 22, 2023, respectively, with the Korean Intellectual Property Office, the disclosures of which are incorporated herein in their entireties by reference.

The present disclosure relates to a separator for an electrochemical device and an electrochemical device including the separator.

### [BACKGROUND ART]

Of components of an electrochemical device, a separator includes a porous polymer substrate disposed between a positive electrode and a negative electrode, and takes on the role of separating the two electrodes from each other, preventing an electrical short between the electrodes, and allowing the passage of electrolyte and ions through its pores. While the separator itself does not participate in electrochemical reactions, its physical properties such as the wettability to electrolyte, the degree of porosity, and the thermal shrinkage rate affect the performance and safety of the electrochemical device.

In order to enhance the physical properties of the separator, various methods are being attempted, for example, forming a coating layer on the porous polymer substrate, and adding diverse substances to the coating layer to alter the physical properties of the coating layer. For instance, an inorganic substance may be added to the coating layer for the purpose of improving the mechanical strength of the separator, or an inorganic substance or hydrate may be added to the coating layer for the purpose of improving the fire resistance and the heat resistance of the polymer substrate.

### [DETAILED DESCRIPTION OF INVENTION]

### [TECHNICAL PROBLEMS]

The present disclosure provides a separator for an electrochemical device, and an electrochemical device including the separator, by which the present disclosure may prevent the deformation of the separator and the damage to pores of the separator caused by a pressure applied during a lamination process for bonding the separator and the electrodes, and consequently, improve the insulation breakdown voltage level of the separator.

Advantages of the present disclosure are not limited to those described above, and one of ordinary skill in the art of the present disclosure can clearly understand other advantages from the descriptions herein below.

### [TECHNICAL SOLUTION]

An embodiment of the present disclosure provides a separator for an electrochemical device, which includes a porous polymer substrate, wherein the porous polymer substrate includes a non-crystalline polymer resin and a crystalline polymer resin, and an eluate eluted from the porous polymer substrate through a temperature rising elution fractionation (TREF) method has a weight-average molecular weight (Mw) of about 100,000 or more.

According to an embodiment of the present disclosure, the porous polymer substrate may include about 40 wt% or less of a fraction eluted at a temperature of 35 °C or lower by the TREF method.

According to an embodiment of the present disclosure, a content of the non-crystalline polymer resin in the porous polymer substrate may be about 40 wt% or less.

According to an embodiment of the present disclosure, a content of the crystalline polymer resin in the porous polymer substrate may be about 60 wt% or more.

According to an embodiment of the present disclosure, a weight ratio of the non-crystalline polymer resin and the crystalline polymer resin in the porous polymer substrate may be about 1:1 to 10:1.

According to an embodiment of the present disclosure, a deviation of an indentation depth in the porous polymer substrate may be about -5 nm to 5 nm.

According to an embodiment of the present disclosure, the porous polymer substrate may include a polyolefin-based resin, the non-crystalline polymer resin may be a non-crystalline polyolefin-based resin, and the crystalline polymer resin may be a crystalline polyolefin-based resin.

According to an embodiment of the present disclosure, the polyolefin-based resin may be one selected from the group consisting of polyethylene; polypropylene; polybutylene; polypentene: polyhexene: polyoctene; at least one copolymer of ethylene, propylene, butene, pentene, 4-methylpentene, hexene, and octene; and combinations thereof.

According to an embodiment of the present disclosure, the polyolefin-based resin may have 500 or less of average short chain branches (SCB) per total 1,000 carbon atoms.

According to an embodiment of the present disclosure, a melting index (ASTM D1238, 190 °C, 2.16 kg) of the polyolefin-based resin may be about 0.1 g/10 min to 0.3 g/10 min.

According to an embodiment of the present disclosure, a weight-average molecular weight (Mw) of the porous polymer substrate may be about 500,000 to 3,000,000.

According to an embodiment of the present disclosure, a polydispersity index (PDI) of the eluate may be about 5 or more.

According to an embodiment of the present disclosure, when a pressure of 8 MPa is applied at 70 °C, at least one of conditions (i) to (iii) set forth below may be satisfied:
(i) A thickness reduction rate of the porous polymer substrate, defined by Equation 1 below, is about 10 % or less: Thickness reduction rate (%)=(thickness of porous polymer substrate before application of pressure-thickness of porous polymer substrate after application of pressure)/thickness of porous polymer substrate before application of pressure × 100;
(ii) An air permeability increase rate of the porous polymer substrate after compression, defined by Equation 2 below, is about 185 % or less: Air permeability increase rate (%)=(air permeability after compression-air permeability before compression)/(air permeability before compression) × 100; and
(iii) an insulation breakdown voltage of the porous polymer substrate is about 1,000 V or more.

According to an embodiment of the present disclosure, the porous polymer substrate may have a thickness of about 1 µm to 30 µm.

Another embodiment of the present disclosure provides an electrochemical device including: a positive electrode; a negative electrode; and the separator described above, which is interposed between the positive electrode and the negative electrode.

### [EFFECT OF INVENTION]

The separator for the electrochemical device according to an embodiment of the present disclosure may improve the weight-average molecular weight and the polydispersity index of an eluate eluted at a high temperature to minimize the deformation caused from the pressure applied during the lamination process, and consequently, improve the insulation breakdown voltage level.

The electrochemical device according to an embodiment of the present disclosure may prevent a Hi-Pot failure and a low voltage failure, and therefore, enhance the battery performance.

### [BRIEF DESCRIPTION OF THE DRAWINGS]

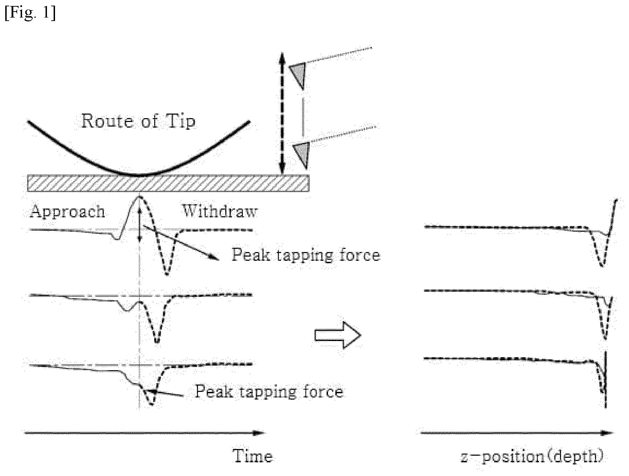

FIG. 1 is a view schematically illustrating a method of measuring an indentation depth.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### [BEST MODE FOR CARRYING OUT THE INVENTION]

In the descriptions herein, when a certain part "includes" a specific component, this description does not indicate that the certain part excludes other components, but indicates that the part may further include other components, unless otherwise defined.

In the descriptions herein, the expression "A and/or B" indicates "A and B, or A or B."

In the descriptions herein, when a component is disposed "on" a specific part, this description does not exclude a case where another component is disposed between the component and the specific part, but indicates that another component may be further disposed therebetween, unless otherwise described.

As used herein, terms such as "about," "approximately," and "substantially" are used to describe a range of numerical values or a degree, or a close meaning thereto in consideration of an inherent manufacturing and material tolerances, and are intended to prevent infringers from unfairly taking advantage of the present disclosure that describes precise or absolute numerical values to aid the understanding of the present disclosure.

In the descriptions herein, when an object includes "pores," this description indicates that the object has a plurality of pores connected to each other, and this structure may allow vapor and/or liquid fluids to pass through the pores from one side to the other side of the object.

In the descriptions herein, a separator has the porous characteristic, including a plurality of pores, and serves as a porous ion-conducting barrier that allows the passage of ions while blocking an electrical contact between the negative electrode and the positive electrode in an electrochemical device.

Hereinafter, the present disclosure will be described in more detail.

In a secondary battery electrode assembly, a separator may be bonded with the electrodes through the lamination process, and in order to ensure the bonding force between the electrodes and the separator, a polymer binder may be added to a composition for a coating layer of the separator.

Meanwhile, there is a problem that when the process speed of the lamination process is increased to improve the process yield, the time for applying heat is reduced, which may weaken the bonding force. In order to improve the bonding force, a method of increasing the pressure during the lamination process has been used. However, when high pressure is applied to the separator, the separator may be deformed, for example, its thickness may be reduced. Further, the pores may be damaged, and as a result, the insulation breakdown voltage of the separator may decrease, which may cause the Hi-Pot failure and the low-voltage failure.

The present disclosure provides a separator, in which a polymer resin included in a porous polymer substrate may be adjusted to prevent the reduction of the thickness of the separator and increase the insulation breakdown voltage.

In polyethylene applied to a porous substrate of a separator, crystals and non-crystals co-exist, and as the content of crystals is relatively high and the molecular weight distribution thereof at that time is narrow, the compression resistance that affects the degree of thickness variation of a material after compression is excellent. Meanwhile, when propylene is added during a polymerization of polyethylene to improve the processability in making a polyethylene film, the content of non-crystals increases. In an embodiment of the present disclosure, propylene is not added or is added in a small amount equal to or less than a reference value during the polymerization of polyethylene, so that the content of crystals in the manufactured porous substrate increases or is adjusted, which may improve the general characteristics of the separator such as the compression resistance.

An embodiment of the present disclosure provides a separator for an electrochemical device, which includes a porous polymer substrate manufactured by the method described above, wherein the porous polymer substrate includes a non-crystalline polymer resin and a crystalline polymer resin, and an eluate eluted when the porous polymer substrate is analyzed by a temperature rising elution fractionation (TREF) method has a weight-average molecular weight (Mw) of about 100,000 or more.

As described above, when manufacturing the separator for the electrochemical device according to an embodiment of the present disclosure, propylene is not added or is added in a small amount during the polymerization of polyethylene to increase or adjust the content of crystals, which may improve the weight-average molecular weight and the polydispersity index of the eluate eluted at a high temperature to minimize the deformation caused from the pressure applied during the lamination process, and consequently, improve the insulation breakdown voltage level.

An embodiment of the present disclosure relates to a separator itself, or a separator for an electrochemical device to which the separator may be applied as a component. Thus, as necessary, the separator according to an embodiment of the present disclosure may include an additional layer, which is different from the porous polymer substrate in terms of material or function, on at least one surface of the porous polymer substrate. For example, in an embodiment of the present disclosure, the separator may include a coating layer including inorganic particles and/or a polymer binder, for example, an organic/inorganic composite layer on at least one surface or both surfaces of the porous polymer substrate.

According to an embodiment of the present disclosure, the separator for the electrochemical device includes the porous polymer substrate. Since the separator for the electrochemical device includes the porous polymer substrate, the separator may allow the passage of lithium ions while blocking the electrical contact between the positive electrode and the negative electrode, and further, implement the shutdown performance at an appropriate temperature. In the descriptions herein, the "shutdown performance" may indicate an ability of the porous polymer substrate to close off the pores therein and block the passage of lithium ions through the separator under an abnormal high temperature condition.

According to an embodiment of the present disclosure, the porous polymer substrate includes the non-crystalline polymer resin and the crystalline polymer resin. For example, the polymer resin of the porous polymer substrate includes both the crystalline and non-crystalline polymer resins, which may indicate that the polymer resin includes a uniform mixture of the non-crystalline and crystalline polymer resins, or one molecule of the polymer resin includes both the non-crystalline and crystalline structures. In this way, since the porous polymer substrate includes the non-crystalline and crystalline polymer resins, the uniformity of the porous polymer substrate may be improved, and the compression resistance may be enhanced.

According to an embodiment of the present disclosure, the porous polymer substrate includes both the crystalline and non-crystalline polymer resins by adjusting the addition of propylene during the polymerization of polyethylene, and when the porous polymer substrate is analyzed by the TREF method, the weight-average molecular weight (Mw) of an eluted eluate is about 100,000 or more. For example, when the porous polymer substrate is analyzed by the TREF method, the weight-average molecular weight (Mw) of the eluted eluate may be about 100,000 to 10,000,000, 200,000 to 9,000,000, 300,000 to 8,000,000, 400,000 to 7,000,000, 500,000 to 6,000,000, 600,000 to 5,000,000, 700,000 to 4,000,000, 800,000 to 3,000,000, 900,000 to 2,000,000, or 900,000 to 1,000,000. In this way, when the porous polymer substrate is analyzed by the TREF method, the weight-average molecular weight (Mw) of the eluted eluate is adjusted to fall in the range above, so that the uniformity of the porous polymer substrate may be improved, and the compression resistance may be enhanced.

According to an embodiment of the present disclosure, the eluate may be eluted at a temperature of about 90 °C to 110 °C by the TREF method. For example, the eluate may be eluted at a temperature of about 90 °C to 110 °C, 91 °C to 109 °C, 92 °C to 108 °C, 93 °C to 107 °C, 94 °C to 106 °C, 95 °C to 105 °C, 96 °C to 104 °C, 97 °C to 103 °C, 98 °C to 102 °C, or 99 °C to 101 °C through the TREF method. The polymer resin of the porous polymer substrate of the present disclosure includes both the crystalline and non-crystalline polymer resins by adjusting the addition of propylene during the polymerization of polyethylene, and further, the temperature at which the eluate of the porous polymer substrate is obtained from the TREF method is adjusted as described above, so that the uniformity of the porous polymer substrate may be improved, and the compression resistance may be enhanced. Furthermore, the mechanical properties of the porous polymer substrate may be improved.

In the descriptions herein, the "temperature rising elution fractionation (TREF)" analysis may be carried out using Polymer Char's TREF instrument. According to the TREF analysis, a sample may be melted and injected in a high temperature state into a column, the temperature may be then lowered to induce the crystallization of the sample, and when the sample precipitates in the column, the temperature may be increased to measure the molecular weight of the eluted sample. For example, 40 mg of a polymer sample is dissolved in 20 mL of a trichlorobenzene solvent at 150 °C for 120 minutes, and then, stabilized at 100 °C for 45 minutes. The stabilized sample is introduced into the TREF column, cooled to 35 °C at a constant rate of 0.5 °C/min, and then, maintained for 15 minutes. Subsequently, the sample is heated from 35 °C to 80 °C at a constant rate of 20 °C/min while being maintained for 20 minutes per 5 °C increment, and further heated from 80 °C to 120 °C at a constant rate of 20 °C/min while being maintained for 20 minutes per 2 °C increment; and the weight-average molecular weight of the eluted polymer sample is measured to derive a TREF analysis graph from the results of the concentration measurement.

According to an embodiment of the present disclosure, the porous polymer substrate may include about 40 wt% or less of a fraction eluted at the temperature of 35 °C or lower by the TREF method. For example, the porous polymer substrate may include a first fraction eluted at the temperature of 35 °C or lower and a second fraction eluted at the temperature exceeding 35 °C, when being analyzed by the TREF method. The first fraction may include the non-crystalline polymer resin. The second fraction is eluted from the porous polymer substrate at the temperature exceeding 35 °C by the TREF method, and may include the crystalline polymer resin. For example, the second fraction may be eluted at a temperature of higher than 35 °C and 100 °C or lower, 40 °C to 90 °C, 50 °C to 80 °C, or 60 °C to 70 °C. Also, the second fraction may be eluted at a temperature of 98 °C or higher.

According to an embodiment of the present disclosure, the content of the non-crystalline polymer resin in the porous polymer substrate may be about 40 wt% or less. For example, the content of the non-crystalline polymer resin in the porous polymer substrate may be more than about 0 wt% and 40 wt% or less, 2 wt% to 38 wt%, 4 wt% to 36 wt%, 6 wt% to 34 wt%, 8 wt% to 32 wt%, 10 wt% to 30 wt%, 12 wt% to 28 wt%, 14 wt% to 26 wt%, 16 wt% to 24 wt%, or 18 wt% to 22 wt%. By adjusting the content of the non-crystalline polymer resin in the porous polymer substrate to fall in the range above, the uniformity of the porous polymer substrate may be improved, and the compression resistance may be enhanced. Furthermore, the mechanical properties of the porous polymer substrate may be improved.

According to an embodiment of the present disclosure, the content of the crystalline polymer resin in the porous polymer substrate may be about 60 wt% or more. For example, the content of the crystalline polymer resin in the porous polymer substrate may be about 60 wt% or more and less than 100 wt%, 62 wt% to 98 wt%, 64 wt% to 96 wt%, 66 wt% to 94 wt%, 68 wt% to 92 wt%, 70 wt% to 90 wt%, 72 wt% to 88 wt%, 74 wt% to 86 wt%, 76 wt% to 84 wt%, or 78 wt% to 82 wt%. Also, the content of the crystalline polymer resin in the porous polymer substrate may be about 70 wt% to 85 wt%. By adjusting the content of the crystalline polymer resin in the porous polymer substrate to fall in the range above, the uniformity of the porous polymer substrate may be improved, and the compression resistance may be enhanced. Furthermore, the mechanical properties of the porous polymer substrate may be improved.

According to an embodiment of the present disclosure, the weight ratio of the non-crystalline polymer resin and the crystalline polymer resin in the porous polymer substrate may be about 1:1 to 10:1. For example, the weight ratio of the non-crystalline polymer resin and the crystalline polymer resin in the porous polymer substrate may be about 1.5:1 to 9.5:1, 2.0:1 to 9.0:1, 2.5:1 to 8.5:1, 3.0:1 to 8.0:1, 3.5:1 to 7.5:1, 4.0:1 to 7.0:1, 4.5:1 to 6.5:1, or 5.0:1 to 6.0:1. By adjusting the weight ratio of the non-crystalline polymer resin and the crystalline polymer resin in the porous polymer substrate to fall in the range above, the uniformity of the porous polymer substrate may be improved, and the compression resistance may be enhanced. Furthermore, the mechanical properties of the porous polymer substrate may be improved.

According to an embodiment of the present disclosure, the content of the crystalline polymer resin in the porous polymer substrate may be about 70 wt% or more and 85 wt% or less based on 100 wt% of the porous polymer substrate. By adjusting the content of the crystalline polymer resin in the porous polymer substrate to fall in the range above, the indentation depth of the porous polymer substrate may be reduced, and the deviation of the indentation depth is minimized, so that the insulation breakdown voltage level may be improved.

According to an embodiment of the present disclosure, the indentation depth of the porous polymer substrate may be about 20 nm or less. For example, the indentation depth of the porous polymer substrate may be about 0 nm to 20 nm, more than 0 nm and 19 nm or less, 1 nm to 18 nm, 2 nm to 17 nm, 3 nm to 16 nm, 4 nm to 15 nm, 5 nm to 14 nm, 6 nm to 13 nm, 7 nm to 12 nm, 8 nm to 11 nm, or 9 nm to 10 nm. By adjusting the indentation depth of the porous polymer substrate to fall in the range above, the compression resistance of the porous polymer substrate may be enhanced, the thickness uniformity of the porous polymer substrate after the lamination process may be improved, and the thickness variation may be minimized.

In the descriptions herein, the "indentation" is a kind of a technique for analyzing mechanical properties of a material, and is carried out by indenting a material with a diamond indenter having any of various shapes, and comparing and analyzing the imprint shape and the load at the indentation time. The indentation test is not only a technique for measuring the fracture toughness or hardness of a material, but also used as a research technique as many studies have been recently progressed in various different directions, for example, to analyze the elastic-plastic behavior of a material and the residual stress state, test the adhesion of a thin film, and analyze the fracture characteristic and the phase transformation. For example, when the indentation is performed on a fine material such as the separator of the present disclosure, the nano-indentation may be used to apply the load in units of N (Newton) or lower using the indenter.

FIG. 1 is a view schematically illustrating a method for measuring the indentation depth. In the descriptions herein, the "indentation depth" may be measured as follows: after setting Dimension Icon (manufactured by Bruker) to the conditions described below, a peak tapping force is measured while moving the tip on the surface of a sample as illustrated in FIG. 1, and the depth of the tip penetrating the surface of the sample is measured using the atomic force microscope (AFM, OSTESPA-R3, Bruker, f=300 kHz, k=26 N/m) at the time of measuring the peak tapping force.
- Mode: Tapping (Peak Force QNM)
- Scan speed: 0.3 Hz
- Peak force setpoint: 100 nN, Amplitude: 300 nm
- Scan angle: 90 °

According to an embodiment of the present disclosure, the deviation of indentation depth of the porous polymer substrate may be about -5 nm to 5 nm. For example, the deviation of the indentation depth of the porous polymer substrate may be about -4 nm to 4 nm, -3 nm to 3 nm, -2 nm to 2 nm, -1 nm to 1 nm, -0.5 nm to 0.5 nm, or -0.1 nm to 0.1 nm. In the descriptions herein, the deviation refers to a difference in variance from an average, and may indicate a difference in indentation depth at a specific position of the porous polymer substrate from the average indentation depth of the porous polymer substrate. By adjusting the deviation of the indentation depth of the porous polymer substrate to fall in the range above, the insulation breakdown voltage of the porous polymer substrate may be increased.

According to an embodiment of the present disclosure, the porous polymer substrate may include a polyolefin-based resin. Since the porous polymer substrate includes the polyolefin-based resin, the separator for the electrochemical device may easily be formed, and the shutdown performance may be implemented in the event when a high temperature occurs during the operation of batteries.

According to an embodiment of the present disclosure, the non-crystalline polymer resin may be a non-crystalline polyolefin-based resin. In the descriptions herein, the "non-crystalline" may indicate a state where molecules are arranged in an unordered manner. As described above, the non-crystalline polyolefin-based resin is selected as the non-crystalline polymer resin, so that the shutdown performance may be implemented when a high temperature occurs during the operation of batteries.

According to an embodiment of the present disclosure, the crystalline polymer resin may be a crystalline polyolefin-based resin. In the descriptions herein, the "crystalline" may refer to a state where molecules are arranged in an ordered manner. As described above, the crystalline polyolefin-based resin is selected as the crystalline polymer resin, so that the mechanical properties of the porous polymer resin may be improved, and the compression resistance may be enhanced.

In the descriptions herein, the degree of "crystallization" may refer to the content of crystals, which are eluted at about 98 °C or higher when measured by the TREF.

According to an embodiment of the present disclosure, the polyolefin-based resin may be one selected from the group consisting of: polyethylene; polypropylene; polybutylene; polypentene; polyhexene; polyoctene; one or more copolymers among ethylene, propylene, butene, pentene, 4-methylpentene, hexene, and octene; and combinations thereof. For example, the polyolefin-based resin may be polyethylene. By selecting the polyolefin-based resin from those described above, the porous polymer substrate may include the crystalline polymer resin and the non-crystalline polymer resin, and as a result, the mechanical properties and the compression resistance of the porous polymer substrate may be enhanced.

According to an embodiment of the present disclosure, the polyolefin-based resin may have about 500 or less of average short chain branches (SCB) per total 1,000 carbon atoms of contained polyolefin. The number of short chain branches may be the number of methyl groups per total 1,000 carbon atoms (CH₃/1,000 TC). The short chain branches may interfere with the creation of the crystal structure during the crystallization process of the polymer, which may affect the properties of the substrate. The number of short chain branches may be controlled by adjusting the type and content of monomers contained in the polyolefin substrate. For example, the number of short chain branches included in the polyolefin substrate may be controlled by adjusting the type and content of the polyolefin-based polymer resin used in the polymerization process of the polymer resin used for the polyolefin substrate and/or the film formation process using the polymer resin. For example, the number of short chain branches may be increased by increasing the content of, for example, propylene or butylene during the polymerization of the polyolefin-based polymer resin, or adding, for example, polypropylene during the film formation process. The number of short chain branches may be verified by comparing between the resins included in the fractions eluted at the different temperatures when the analysis by the TREF method is performed. For example, the number of short chain branches may be verified by counting the number of CH₃ per about 1,000 carbon atoms using an IR detector and CH, CH₂, and CH₃ filters, which are used for performing the TREF analysis. For example, in the polyolefin substrate, the number of average short chain branches may be about 100 to 500, 150 to 450, 200 to 400, or 250 to 350 per about total 1,000 carbon atoms. Also, in the polyolefin substrate, the number of average short chain branches may be 400 or less per total 1,000 carbon atoms. When the number of average short chain branches exceeds the range above, the orientation of the polyolefin-based polymer resin included in the polyolefin substrate may become unsatisfactory. By adjusting the number of average short chain branches to fall in the range above, the satisfactory orientation of the crystalline polyolefin-based polymer resin may be achieved, so that the polyolefin substrate exhibiting the compression resistance during the lamination process may be provided.

According to an embodiment of the present disclosure, the polyolefin-based resin may have a melting index of about 0.1 g/10 min to 0.3 g/10 min. The melting index may be measured using ASTM D1238, and calculated as follows: after a sample is introduced into a cylinder and then heated to about 190 °C, or a heated sample is charged into a cylinder, a piston is inserted to apply a load of about 2.16 kg, and the weight of resin ejected through an orifice (inner diameter: 2.09 mm, length: 8 mm) disposed on the opposite side to the piston is measured and converted into a passage amount for 10 minutes. By adjusting the melting index of polyolefin to fall in the range above, the stiffness of the porous polymer substrate including the polyolefin-based resin may be determined, so that the porous polymer substrate exhibiting the compression resistance during the lamination process may be provided.

According to an embodiment of the present disclosure, the weight-average molecular weight (Mw) of the porous polymer substrate may be about 500,000 to 3,000,000. For example, the weight-average molecular weight (Mw) of the porous polymer substrate may be about 500,000 to 2,500,000, or 1,000,000 to 2,000,000. By adjusting the weight-average molecular weight (Mw) of the porous polymer substrate to fall in the range above, the mechanical properties and the compression resistance of the porous polymer substrate may be improved. Further, when different types of polyolefin-based resins are used in mixture, or the separator has a multilayer structure including different types of polyolefin-based resins, the weight-average molecular weight of the polyolefin-based resin may be calculated by adding up the weight-average molecular weights that correspond to the content ratio of the different types of polyolefin-based resins.

In the descriptions herein, the weight-average molecular weight (Mw) and the polydispersity index may be measured by gel permeation chromatography (GPC, PL GPC220, Agilent Technologies), and measurement conditions may be set as follows.
- Column: PL Olexis (Polymer Laboratories)
- Solvent: TCB (trichlorobenzene)
- Flow rate: 1.0 ml/min
- Sample concentration: 1.0 mg/ml
- Injection amount: 200 µℓ
- Column temperature: 160 °C
- Detector: Agilent High Temperature RI detector
- Standard: Polystyrene (calibrated with a cubic function)

According to an embodiment of the present disclosure, as necessary, another resin component may be further mixed, in addition to the polyolefin-based resin, and for example, filler particles other than the resin component may be included. The filler particles may be introduced to function as a pressure barrier that prevents the excessive reduction in thickness, pore size, and air permeability of the separator substrate due to the high pressure applied during the lamination process to be described later. The filler particles may include organic or inorganic fillers each having a predetermined particle size, and are not limited to a specific component as long as they have a strength equal to or greater than that of the polyolefin-based resin.

According to an embodiment of the present disclosure, the porous polymer substrate may be manufactured using a method (wet method), which kneads the polyolefin-based resin with a diluent at a high temperature to form a single phase, extracts the diluent to form pores after a phase separation of the polymer material and the diluent through a cooling process, and then, stretches and thermally secures the polymer material.

According to an embodiment of the present disclosure, one of ordinary skill in the art may easily prepare the average size and the maximum size of the pores of the separator to be adapted to the scope of the present disclosure, by adjusting, for example, the mixing ratio of the diluent, the stretching rate, and the temperature for the thermal securing process.

According to an embodiment of the present disclosure, the size of the pores may be calculated from a pore size distribution measured using the capillary flow porometer method. For example, first, the separator to be measured is wetted with a wetting agent such as the Galwick solution, and thereafter, the air pressure on one side of the substrate is gradually increased. When the applied air pressure becomes greater than the capillary attraction of the wetting agent filled in the pores, the wetting agent that is blocking the pores is pushed out, so that the size and distribution of the pores may be measured based on the pressure and the flow rate at the moment when the wetting agent is pushed out, and the average and maximum pore sizes may be verified.

The porous polymer substrate may include pores each having an average diameter of about 0.01 µm to 1 µm. For example, the size of each pore included in the porous polymer substrate may be about 0.01 µm to 0.09 µm, 0.02 µm to 0.08 µm, 0.03 µm to 0.07 µm, or 0.04 µm to 0.06 µm. By adjusting the pore size of the porous polymer substrate to fall in this range, the air permeability and the ion conductivity of the entire manufactured separator may be controlled.

According to an embodiment of the present disclosure, the polydispersity index (PDI) of the eluate above may be about 5 or more. For example, the polydispersity index (PDI) of the eluate may be about 6 to 19, 7 to 18, 8 to 17, 9 to 16, 10 to 15, 11 to 14, or 12 to 13. By adjusting the polydispersity index of the eluate to fall in this range, the uniformity of the crystalline polymer resin may be improved, and the compression resistance may be enhanced.

According to an embodiment of the present disclosure, the separator may meet one or more of conditions (i) to (iii) below when a pressure of 8 MPa is applied at about 70 °C.
(i) The thickness reduction rate of the porous polymer substrate, defined by Equation 1 below, may be about 10 % or less. Thickness reduction rate (%)=(thickness of porous polymer substrate before application of pressure-thickness of porous polymer substrate after application of pressure)/thickness of porous polymer substrate before application of pressure × 100

For example, when the pressure of 8 MPa is applied at about 70 °C, the thickness reduction rate of the porous polymer substrate according to Equation 1 above may be about 0 % to 10 %, 1 % to 9 %, 2 % to 8 %, 3 % to 7 %, or 4 % to 6 %. By achieving the thickness reduction rate of the porous polymer substrate within the range above, the compression resistance of the separator may be enhanced.

(ii) The air permeability increase rate of the porous polymer substrate after compression, defined by Equation 2 below, may be about 185 % or less. Air permeability increase rate (%)=(air permeability after compression-air permeability before compression)/(air permeability before compression) × 100

The compression resistance of the porous polymer substrate may be determined based on the variation rate of the air permeability of the substrate before and after compression. Before compression, the porous polymer substrate may have the air permeability of about 10 s/100 cc to 100 s/100 cc. For example, the air permeability of the porous polymer substrate may be 10 s/100 cc to 90 s/100 cc, 20 s/100 cc to 80 s/100 cc, 30 s/100 cc to 70 s/100 cc, or 40 s/100 cc to 60 s/100 cc. Also, the air permeability of the porous polymer substrate may be about 50 s/100 cc to 80 s/100 cc. When the air permeability of the porous polymer substrate falls in the range above, the manufactured separator may have the air permeability in the range suitable for ensuring the power output and the cycle characteristics of the electrochemical device.

Further, when the porous polymer substrate is compressed by applying the pressure of 8 MPa at 70 °C for about 10 seconds, the air permeability increase rate after compression may be about 0 % to 180 %, 20 % to 160 %, 40 % to 140 %, 60 % to 120 %, 80 % to 100 %. Also, after compression, the porous polymer substrate may have the air permeability of about 200 s/100 cc or less. When the porous polymer substrate satisfies the air permeability increase rate that falls in the range above, the occurrence of defects caused from its deformation during the lamination process may be reduced. Under the condition described above, when the substrate exhibiting the air permeability exceeding about 200 s/100 cc after compression is used, the power output and the cycle characteristics of the electrochemical device may be degraded.

The air permeability (s/100 cc) refers to the passage time (seconds) of about 100 cc of air through the porous polymer substrate or the separator having a predetermined area under a predetermined pressure. The air permeability may be measured using an air permeability tester (Gurley densometer) according to ASTM D 726-58, ASTM D726-94, or JIS-P8117. For example, the 4110N equipment of Gurley may be used to measure the passage time of about 100 cc of air through a sample with the size of about 1 in² (or about 6.54 cm²) under an air pressure of about 0.304 kPa or a water pressure of about 1.215 kN/m². Further, for example, the EG01-55-1MR equipment of Asahi Seico may be used to measure the passage time of about 100 cc of air through a sample with the size of about 1 in² under a constant water pressure of 4.8 inches at room temperature.

(iii) The insulation breakdown voltage of the porous polymer substrate may be about 1,000 V or more.

For example, when the pressure of 8 MPa is applied at about 70 °C, the insulation breakdown voltage of the porous polymer substrate may be about 1,000 V to 2,000 V, 1,100 V to 1,900 V, 1,200 V to 1,800 V, 1,300 V to 1,700 V, or 1,400 V to 1,600 V. By adjusting the insulation breakdown voltage of the porous polymer substrate to fall in the range above, the insulation property of the porous polymer substrate may be improved.

In the descriptions herein, the insulation breakdown voltage may refer to a voltage determined when current flow exceeds about 0.5 mA for 3 seconds, while increasing an applied voltage at a rate of about 100 mV/s for a specimen with an about 12 µm thickness.

According to an embodiment of the present disclosure, the porous polymer substrate may have the thickness of about 1 µm to 30 µm. For example, the thickness of the porous polymer substrate may be about 2 µm to 29 µm, 3 µm to 28 µm, 4 µm to 27 µm, 5 µm to 26 µm, 6 µm to 25 µm, 7 µm to 24 µm, 8 µm to 23 µm, 9 µm to 22 µm, 10 µm to 21 µm, 11 µm to 20 µm, 12 µm to 19 µm, 13 µm to 18 µm, 14 µm to 17 µm, or 15 µm to 16 µm. By adjusting the thickness of the porous polymer substrate to fall in the range above, the energy density of the separator for the electrochemical device may be improved.

A method of manufacturing the porous polymer substrate according to an embodiment of the present disclosure may include: kneading and extruding a composition for the porous polymer substrate including the polymer resin; cooling the extruded composition for the porous polymer substrate to be molded into a sheet; stretching the sheet; forming pores in the stretched sheet; and thermally securing the sheet with the pores formed therein to manufacture the porous polymer substrate. By manufacturing the porous polymer substrate in this way, the porous polymer substrate having uniform pores may be provided.

According to an embodiment of the present disclosure, the method of manufacturing the porous polymer substrate may include kneading and extruding the composition for the porous polymer substrate including the polymer resin. As described above, by including the kneading and extruding step, the uniform composition for the porous polymer substrate may be prepared, so that the porous polymer substrate having the uniform pore size may be manufactured.

According to an embodiment of the present disclosure, the composition for the porous polymer substrate may further include a diluent. For example, the diluent may be liquid paraffin oil. When this type of diluent is included, the diluent may easily be removed from the sheet, and the denaturation of the polymer resin may be prevented.

According to an embodiment of the present disclosure, the kinematic viscosity of the liquid paraffin oil may be about 30 cSt to 50 cSt at 40 °C. By using the liquid paraffin oil with the kinematic viscosity that falls in the range above, the concentration of the diluent in the composition for the porous polymer substrate may be adjusted to be uniform.

According to an embodiment of the present disclosure, the weight ratio of the polymer resin and the diluent in the composition for the porous polymer substrate may be about 2:8 to 5:5. By adjusting the weight ratio of the polymer resin and the diluent in the composition for the porous polymer substrate to fall in the range above, the air permeability of the porous polymer substrate may be adjusted.

According to an embodiment of the present disclosure, the extrusion may be performed through a T-die of a biaxial extruder. By performing the extrusion in this way, the thickness of the sheet may easily be adjusted, and the cooling efficiency may be improved.

According to an embodiment of the present disclosure, the method of manufacturing the porous polymer substrate may include cooling the extruded composition for the porous polymer substrate to be molded into a sheet.

According to an embodiment of the present disclosure, the temperature for cooling the sheet may be about 40 °C to 80 °C. For example, the temperature for the casting onto a roll through the T-die may be about 40 °C to 80 °C. By adjusting the temperature for cooling the sheet to fall in this range, the crystalline polymer resin may be obtained, and by adjusting the contents of the crystalline polymer resin and the non-crystalline polymer resin in the porous polymer resin, the indentation depth may be reduced, and further, the standard deviation of the indentation depth may be minimized.

According to an embodiment of the present disclosure, the method of manufacturing the porous polymer substrate may include stretching the sheet. By including the stretching step, the thickness of the porous polymer substrate may be adjusted, so that the sheet may be made as a thin film.

According to an embodiment of the present disclosure, the stretching may be performed biaxially using a tenter type of simultaneous stretching machine. For example, the sheet may be stretched in a machine direction (MD), and then, stretched in a transverse direction (TD). By performing the stretching step in this way, the sheet may be manufactured into a large-area porous polymer substrate.

According to an embodiment of the present disclosure, the method of manufacturing the porous polymer substrate may include forming pores in the stretched sheet. For example, in order to form pores in the stretched sheet, the diluent included in the porous polymer substrate may be removed by using a solvent. The solvent may be methylene chloride. By including the step of forming pores in the stretched sheet as described above, the porous polymer substrate may be manufactured, and the residual diluent may be minimized.

According to an embodiment of the present disclosure, the method of manufacturing the porous polymer substrate may include thermally securing the sheet with the pores formed therein. For example, the temperature for thermally securing the sheet may be about 100 °C to 150 °C. By thermally securing the sheet in this way, the heat resistance of the separator may be improved.

According to an embodiment of the present disclosure, the separator for the electrochemical device may further include a coating layer formed on at least one surface of the porous polymer substrate.

According to an embodiment of the present disclosure, the coating layer includes a polymer binder and inorganic particles, and has the porosity characteristics.

According to an embodiment of the present disclosure, the coating layer may be a porous coating layer that includes a plurality of pores. For example, the coating layer may be a porous coating layer that has a plurality of pores therein. When the coating layer has a plurality of pores as described above, the separator including the coating layer may allow the passage of lithium ions to make current flow while physically separating the negative electrode and the positive electrode.

According to an embodiment of the present disclosure, the polymer binder and the inorganic particles may be included in the coating layer at a weight ratio of about 1:99 to 30:70. This ratio may be adjusted appropriately in the range described above, and when the sum of the polymer binder and the inorganic particles is 100 wt%, the polymer binder may be about 1 wt% or more, 5 wt% or more, or 10 wt% or more, and the inorganic particles may be about 80 wt% or more, 85 wt% or more, 90 wt% or more, or 95 wt% or more.

According to an embodiment of the present disclosure, the coating layer may be formed in the manner that the inorganic particles are bonded by the polymer binder and aggregated in the layer. The pores in the coating layer may be formed due to the interstitial volumes that are voids among the inorganic particles.

In an embodiment of the present disclosure, the air permeability of the coating layer may be about 30 vol% to 70 vol%. When the air permeability of the coating layer is about 70 vol% or less, it is possible to ensure the mechanical characteristics that may withstand a pressing process for bonding with the electrodes, and further, as the surface opening ratio is not overly high, the bonding force may be ensured. Meanwhile, when the air permeability of the coating layer is about 30 vol% or more, it is advantageous from the viewpoint of the ion permeability.

In the descriptions herein, the air permeability of the coating layer refers to the ratio of the volume occupied by pores to the total volume of the coating layer, uses the unit "vol%," and is interchangeable with the terms "void ratio," "porosity," and so on.

In the descriptions herein, the air permeability corresponds to a value obtained by subtracting, from the volume calculated using the thickness, length, and width of the porous polymer substrate and the coating layer, the volume converted from the weight and density of each component of the porous polymer substrate and the coating layer.

For example, the porous polymer substrate may have the air permeability of about 10 vol% to 60 vol%. According to an embodiment, the air permeability of the porous polymer substrate may be about 15 vol% to 55 vol%, 20 vol% to 50 vol%, 25 vol% to 45 vol%, or 30 vol% to 40 vol%. When the air permeability of the porous polymer substrate falls in this range, the manufactured separator may have the ion conductivity in the range suitable for ensuring the power output and the cycle characteristics of the electrochemical device.

In an embodiment of the present disclosure, the air permeability and the pore size of the porous polymer substrate and the coating layer may be measured by the BET 6-point method according to the nitrogen gas adsorption distribution method, using scanning electron microscope (SEM) images, a mercury porosimeter, a capillary flow porometer, or a porosimetry analyzer (Bell Japan Inc., Belsorp-II mini). It may be advantageous to use the capillary flow porosimeter.

According to an embodiment of the present disclosure, the coating layer may have the thickness of about 1 µm to 20 µm on either one side of the porous polymer substrate, but the thickness is not particularly limited thereto. One of ordinary skill in the art may adjust the thickness in an appropriate range in consideration of the heat resistance or the electric resistance.

According to an embodiment of the present disclosure, the thickness of the porous polymer substrate and/or the coating layer may be measured by applying a contact thickness gauge. For example, VL-50S-B manufactured by Mitutoyo may be used as the contact thickness gauge.

According to an embodiment of the present disclosure, the polymer binder usable for the coating layer may be any one polymer resin or a mixture of two or more polymer resins selected from the group consisting of polyvinylidene fluoride-co-hexafluoropropylene, polyvinylidene fluoride-co-trichloroethylene, polymethylmethacrylate, polybutylacrylate, polyacrylonitrile, polyvinylpyrrolidone, polyvinyl acetate, polyethylene-co-vinyl acetate, polyethylene oxide, polyarylate, cyanoethylpullulan, cyanoethylpolyvinylalcohol, cyanoethylcellulose, cyanoethylsucrose, pullulan, and carboxyl methyl cellulose. However, the present disclosure is not limited thereto.

In an embodiment of the present disclosure, the inorganic particles usable for the coating layer are not particularly limited as long as they are electrochemically stable. For example, in an embodiment of the present disclosure, the usable inorganic particles are not particularly limited as long as the oxidation and/or reduction reactions do not occur in an operation voltage range (*e.g.,* 0 V to 5 V based on Li/Li⁺) of an applied electrochemical device.

According to an embodiment of the present disclosure, non-limiting examples of the inorganic particles include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, SiC, Al(OH)₃, TiO₂, aluminum peroxide, zinc tin hydroxide (ZnSn(OH)₆), tin-zinc oxide (Zn₂SnO₄, ZnSnO₃), antimony trioxide (Sb₂O₃), antimony tetraoxide (Sb₂O₄), and antimony pentoxide (Sb₂O₅), and the inorganic particles may include one or more thereof.

According to an embodiment of the present disclosure, the average diameter (D₅₀) of the inorganic particles is not particularly limited, but may be in the range of about 0.3 µm to 1 µm in order to form the coating layer having the uniform thickness and ensure the appropriate void ratio. For example, when the average diameter is less than about 0.3 µm, the dispersibility of the inorganic particles in a slurry prepared to form the coating layer may be deteriorated, and when the average diameter exceeds about 1 µm, the thickness of the formed coating layer may increase.

In the descriptions herein, the "particle diameter D₅₀" refers to the particle diameter at the about 50 % point in the cumulative distribution of the number of particles according to particle diameters. The particle diameter may be measured using a laser diffraction method. For example, powder to be measured is dispersed in a dispersion medium, and then, introduced into a commercially available instrument for the laser diffraction particle size measurement (*e.g*., Microtrac S3500) to measure the difference in diffraction patterns according to particle sizes when the particles pass through the laser beam, and generate the particle size distribution. The particle diameter D₅₀ may be measured by calculating the particle diameter at the point corresponding to 50 % of the cumulative distribution of the number of particles according to particle diameters in the measurement instrument.

According to an embodiment of the present disclosure, the method of forming the coating layer is, for example, as follows. First, the polymer binder is dissolved in a suitable organic solvent to prepare a polymer solution, or dispersed in a suitable dispersion medium to prepare a polymer emulsion. The usable organic solvent or dispersion medium may have the similar solubility index to that of the polymer binder to be used, and may have the low boiling point. This facilitates the uniform mixing and the removal of the solvent or dispersion medium thereafter. Non-limiting examples of the usable solvent include acetone, tetrahydrofuran, methylene chloride, chloroform, dimethylformamide, N-methyl-2-pyrrolidone (NMP), cyclohexane, water, and mixtures thereof.

Next, inorganic particles are added and dispersed in the prepared polymer solution and/or polymer dispersion medium to prepare a slurry for the coating layer. According to an embodiment of the present disclosure, the content ratio of the inorganic particles and the polymer binder is the same as described above, and is appropriately adjusted in consideration of the thickness, pore size, and air permeability of the coating layer of the present disclosure to be finally manufactured.

Next, the slurry for the coating layer prepared above is applied to at least one side of the prepared porous polymer substrate, and then, dried. The method of applying the slurry to the surface of the porous polymer substrate is not limited to a certain method, and a common method well-known in the art may be used. For example, various methods including a dip coating, a die coating, a roll coating, a comma coating, and a combination thereof may be used.

For the drying process, temperature and time conditions are appropriately set to minimize the occurrence of defects in the surface of the coating layer. The drying may be performed using drying aids such as drying ovens or hot air within an appropriate range.

When the separator includes the coating layer, it is possible to reduce the damage to the surface of the porous polymer substrate that faces the coating layer, caused from the pressing by the inorganic particles during the lamination process.

According to an embodiment of the present disclosure, the electrochemical device is manufactured by the lamination process, in which the separator is interposed between the negative electrode and the positive electrode, and heat and/or a pressure is applied to bond the separator and the electrodes. In an embodiment of the present disclosure, the lamination process may be performed by a roll press apparatus including a pair of pressing rollers. That is, the negative electrode, the separator, and the positive electrode may be sequentially laminated, and the laminated material may be inserted between the pressing rollers to implement the inter-layer bonding. In this case, the lamination process may be performed by a hot pressing method.

An embodiment of the present disclosure provides an electrochemical device including: a positive electrode; a negative electrode; and the separator manufactured as described above, which is interposed between the positive electrode and the negative electrode.

The electrochemical device according to an embodiment of the present disclosure may prevent the Hi-Pot failure and the low voltage failure, and consequently, improve the battery performance.

In the present disclosure, the electrochemical device is a device that converts chemical energy into electrical energy through electrochemical reactions, and encompasses primary batteries and secondary batteries in concept. In the descriptions herein, a secondary battery is rechargeable, and indicates, for example, a lithium secondary battery, a nickel-cadmium battery, and a nickel-hydrogen battery. The lithium secondary battery uses lithium ions as ion conductors, and may include, but not limited to, a non-aqueous electrolyte secondary battery having a liquid electrolyte, an all-solid-state battery having a solid electrolyte, a lithium polymer battery having a gel polymer electrolyte, a lithium metal battery using a lithium metal as a negative electrode, and so on.

According to an embodiment of the present disclosure, the positive electrode includes: a positive electrode collector; and a positive electrode active material layer disposed on at least one surface of the collector and including a positive electrode active material, a conductive agent, and a binder resin. The positive electrode active material may include one compound or a mixture of two or more compounds among layered compounds such as lithium manganese complex oxides (*e.g.,* LiMn₂O₄ and LiMnO₂), lithium cobalt oxides (*e.g.,* LiCoO₂), and lithium nickel oxides (*e.g.,* LiNiO₂), or compounds substituted with one or more transition metals; lithium manganese oxides such as compounds of the formula Li₁₊ₓMn₂₋ₓO₄ (where x represents 0 to 0.33), LiMnO₃, LiMn₂O₃, and LiMnO₂; lithium copper oxides (*e.g.*, Li₂CuO₂); vanadium oxides such as LiV₃O₈, LiV₃O₄, V₂O₅, and Cu₂V₂O₇; Ni-site lithium nickel oxides expressed by the formula LiNi₁₋ₓMₓO₂ (where M=Co, Mn, Al, Cu, Fe, Mg, B, or Ga, and x=0.01 to 0.3); lithium manganese complex oxides expressed by the formula LiMn₁₋ₓMₓO₂ (where M=Co, Ni, Fe, Cr, Zn, or Ta, and x=0.01 to 0.1) or Li₂Mn₃MO₈ (where M=Fe, Co, Ni, Cu, or Zn); LiMn₂O₄ where the Li portion of the formula is substituted by alkaline earth metal ions; disulfide compounds; and Fe₂(MoO₄)₃.

According to an embodiment of the present disclosure, the negative electrode includes: a negative electrode collector; and a negative electrode active material layer disposed on at least one surface of the collector and including a negative electrode active material, a conductive agent, and a binder resin. The negative electrode may include, as the negative electrode active material, one compound or a mixture of two or more compounds selected from lithium metal oxides and carbon such as hard carbon and graphitic carbon; metal complex oxides such as LixFe₂O₃ (0≤x≤1), LiₓWO₂ (0≤x≤1), and SnₓMe₁₋ₓMe'_{y}O_{z} (Me: Mn, Fe, Pb, Ge; Me': Al, B, P, Si; the elements of Groups 1, 2, 3 of the periodic table, halogen; 0<x≤1; 1≤y≤3; 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; and titanium oxides.

According to an embodiment of the present disclosure, the conductive agent may be, for example, any one or a mixture of two or more conductive materials selected from the group consisting of graphite, carbon black, carbon fiber or metal fiber, metal powder, conductive whisker, conductive metal oxides, activated carbon, and polyphenylene derivatives. Also, the conductive agent may be one or a mixture of two or more conductive materials selected from the group consisting of natural graphite, artificial graphite, super-p, acetylene black, ketchen black, channel black, furnace black, lamp black, summer black, denka black, aluminum powder, nickel powder, zinc oxide, potassium titanate, and titanium oxide.

According to an embodiment of the present disclosure, the collector is not particularly limited as long as it has a high conductivity without causing chemical changes in batteries, and may be, for example, a stainless steel, copper, aluminum, nickel, titanium, calcined carbon, or aluminum or a stainless steel with its surface processed with carbon, nickel, titanium, silver or the like.

According to an embodiment of the present disclosure, the binder resin may be a polymer commonly used for electrodes in the art. Non-limiting examples of the binder resin include, but not limited to, polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, and carboxyl methyl cellulose.

In an embodiment of the present disclosure, the positive electrode slurry for preparing the positive electrode active material layer may include a dispersant, which may be a pyrrolidone-based compound. For example, the dispersant may be N-methylpyrrolidone (ADC-01, LG Chemicals).

According to an embodiment of the present disclosure, the content of the dispersant in the positive electrode slurry may be more than about 0 parts by weight and 0.5 parts by weight or less based on 100 parts by weight of the positive electrode slurry. For example, the content of the dispersant in the positive electrode slurry may be more than about 0.05 parts by weight and 0.4 parts by weight or less based on 100 parts by weight of the positive electrode slurry.

In an embodiment of the present disclosure, the negative electrode slurry for preparing the negative electrode active material layer may include a dispersant, which may be a pyrrolidone-based compound. For example, the dispersant may be polyvinylpyrrolidone (Junsei in Japan).

According to an embodiment of the present disclosure, the content of the dispersant in the negative electrode slurry may be more than about 0 parts by weight and 0.5 parts by weight or less based on 100 parts by weight of the negative electrode slurry. For example, the content of the dispersant in the negative electrode slurry may be more than about 0.05 parts by weight and 0.4 parts by weight or less based on 100 parts by weight of the negative electrode slurry.

According to an embodiment of the present disclosure, the electrochemical device prepared as described above is mounted into a suitable case, and an electrolyte is injected into the case to manufacture a battery.

According to an embodiment of the present disclosure, the electrolyte may be, but not limited to, an electrolyte solution obtained by dissolving or dissociating a salt having, for example, the structure of A⁺B⁻ in an organic solvent, in which A⁺ includes ions consisting of alkali metal cations such as Li⁺, Na⁺, and K⁺, or combinations thereof, and B⁻ includes ions consisting of anions such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, and C(CF₂SO₂)₃⁻, or combinations thereof, and the organic solvent includes propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma-butyrolactone (γ-butyrolactone), or a mixture thereof.

An embodiment of the present disclosure provides a battery module that includes, as a unit battery, a battery including the electrochemical device described above, a battery pack including the battery module, and a device including the battery pack as a power source. Examples of the device include, but are not limited to, power tools powered by an electric motor; electric vehicles including electric vehicles (EV), hybrid electric vehicles (HEV), and plug-in hybrid electric vehicles (PHEV); electric two-wheeled vehicles including electric bicycles (E-bikes) and electric scooters (E-scooters); electric golf carts; and power storage systems.

Hereinafter, the present disclosure will be described in detail using Examples. However, embodiments according to the present disclosure may be modified in various ways, and the scope of the present disclosure should not be construed as being limited to the Examples. The Examples will be described herein below to more comprehensively describe the invention to one having ordinary skill in the art.

### <Example 1>

30 parts by weight of a polymer resin with a Log Mw of 5.5 (polyethylene resin, Mw: 800,000), and 70 parts by weight of liquid paraffin oil (kinematic viscosity at 40 °C: 40 cSt) were introduced into the biaxial extruder, kneaded, and then, extruded. The extruded polymer resin passed through the T-die and the cooling cast roll to be molded into a sheet, and then, was stretched biaxially by the tenter-type simultaneous stretching machine for performing the MD stretching followed by the TD stretching. From the stretched sheet, the liquid paraffin oil used as a diluent was extracted using methylene chloride, and the sheet was thermally secured at 128 °C to manufacture the porous polymer substrate. When preparing the polyethylene film in Example 1, propylene was not added during the polymerization process in order to increase the content of crystals thereby enhancing the compression resistance.

For the porous polymer substrate, the weight-average molecular weight of the eluate was obtained using the TREF apparatus of Polymer Char. For example, 40 mg of a sample was prepared for the porous polymer substrate, dissolved in 20 mL of a trichlorobenzene solvent at 150 °C for 120 minutes, and then, stabilized at 100 °C for 45 minutes. Then, the sample was introduced into the TREF column, cooled to 35 °C at a constant rate of 0.5 °C/min, and maintained for 15 minutes. Then, the sample was heated from 35 °C to 80 °C at a constant rate of 20 °C/min while being maintained for 20 minutes per 5 °C increment, and further heated from 80 °C to 120 °C at a constant rate of 20 °C/min while being maintained for 20 minutes per 2 °C increment. Thereafter, while flowing a trichlorobenzene solvent in the column at a flow rate of 0.5 mL/min, the weight-average molecular weight of the polymer sample eluted at 98 °C was measured.

Further, using the weight-average molecular weight measured for the porous polymer substrate and the number-average molecular weight derived through a GPC (gel permeation chromatography) analysis, the polydispersity index was calculated by Equation 3 below. Polydispersity index (PDI)=(weight-average molecular weight)/(number-average molecular weight)

The Log value (Log Mw) of the weight-average molecular weight of the eluate of the porous polymer substrate was 5.5, and the polydispersity index (PDI) of the eluate of the porous polymer substrate was 6.0.

### <Example 2>

The porous polymer substrate was produced in the same manner as in Example 1, except that the Log Mw of the polymer resin was 6.2.

### < Example 3>

The porous polymer substrate was produced in the same manner as in Example 1, except that the Log Mw of the polymer resin was 5.1, and the polydispersity index (PDI) was 5.2.

### < Example 4>

The porous polymer substrate was produced in the same manner as in Example 1, except that the Log Mw of the polymer resin was 5.1, and the polydispersity index (PDI) was 9.9.

### < Comparative Example 1>

Compared to Example 1 in which propylene was not added during the polymerization process of the polyethylene resin, Comparative Example 1 added propylene in an amount of about 7 parts by weight based on 100 parts by weight of ethylene during the polymerization process of the polyethylene resin to prepare the polymer resin (Mw: 800,000), and produced the porous polymer substrate in the same manner as in Example 1, except that the Log Mw of the polymer resin was 2.9.

### < Comparative Example 2>

Compared to Example 1 in which propylene was not added during the polymerization process of the polyethylene resin, Comparative Example 2 added propylene in an amount of 5.5 parts by weight based on 100 parts by weight of ethylene during the polymerization process of the polyethylene resin to prepare the polymer resin (Mw: 800,000), and produced the porous polymer substrate in the same manner as in Example 1, except that the Log Mw of the polymer resin was 4.4.

### < Comparative Example 3>

Compared to Example 1 in which propylene was not added during the polymerization process of the polyethylene resin, Comparative Example 3 added propylene in an amount of 3 parts by weight based on 100 parts by weight of ethylene during the polymerization process of the polyethylene resin to prepare the polymer resin (Mw: 800,000), and produced the porous polymer substrate in the same manner as in Example 1, except that the Log Mw of the polymer resin was 5.1, and the polydispersity index (PDI) was 2.3.

### < Comparative Example 4>

Compared to Example 1 in which propylene was not added during the polymerization process of the polyethylene resin, Comparative Example 4 added propylene in an amount of 1.5 parts by weight based on 100 parts by weight of ethylene during the polymerization process of the polyethylene resin to prepare the polymer resin (Mw: 800,000), and produced the porous polymer substrate in the same manner as in Example 1, except that the Log Mw of the polymer resin was 5.1, and the polydispersity index (PDI) was 3.9.

### <Experimental Example 1: Measurement of Thickness Reduction Rate>

For the porous polymer substrate of each of Examples 1 to 4 and Comparative Examples 1 to 4, the thickness before pressure was applied and the thickness after pressure of 8 MPa was applied at 70 °C were measured using the contact thickness gauge (VL-50S-B manufactured by Mitutoyo), to verify the thickness reduction rate of the porous polymer substrate according to Equation 1 below. For the measurement, the porous substrate was punched to obtain a 5 cm × 5 cm sample, and the thickness was measured at total five points that include four points, which are 1 cm apart from the corners of the sample, and one point at the center of the sample. Further, the measurement was performed three times for samples corresponding to the left, center, and right positions along the TD, and the obtained arithmetical mean was taken as the thickness of the porous polymer substrate. Thickness reduction rate (%)=(thickness of porous polymer substrate before application of pressure-thickness of porous polymer substrate after application of pressure)/thickness of porous polymer substrate before application of pressure × 100

**[Table 1]**

| | Log Mw | Polydispersity Index (PDI) | Thickness Reduction Rate (%) |
|---|---|---|---|
| Example 1 | 5.5 | 6.0 | 6.7 |
| Example 2 | 6.2 | 6.0 | 3.8 |
| Example 3 | 5.1 | 5.2 | 5.9 |
| Example 4 | 5.1 | 9.9 | 3.2 |
| Comparative Example 1 | 2.9 | 6.0 | 17.9 |
| Comparative Example 2 | 4.4 | 6.0 | 13.1 |
| Comparative Example 3 | 5.1 | 2.3 | 12.8 |
| Comparative Example 4 | 5.1 | 3.9 | 10.9 |

From Table 1 above, it is verified that in Comparative Examples 1 and 2, the thickness reduction rate of the porous polymer substrate is high because the weight-average molecular weight is low, whereas in Examples 1 and 2, the thickness reduction rate of the porous polymer substrate decreases due to the increased weight-average molecular weight.

Further, it is verified that when the weight-average molecular weight is the same, in Comparative Examples 3 and 4, the thickness reduction rate of the porous polymer substrate is high because the polydispersity index is low, whereas in Examples 3 and 4, the thickness reduction rate of the porous polymer substrate decreases due to the increased polydispersity index.

According to an embodiment of the present disclosure, by adjusting the weight-average molecular weight and the polydispersity index of the crystalline polymer resin included in the porous polymer substrate, the compression resistance may be enhanced, and the thickness variation rate may be reduced.

### < Example 5>

A polyolefin resin (copolymer including ethylene and propylene at a weight ratio of 96:4, weight-average molecular weight: 800,000) and liquid paraffin oil (kinematic viscosity at 40 °C: 40 cSt) were mixed at a weight ratio of 3:7, and 5 wt% of polypropylene was added based on the total weight of the polyolefin resin. The mixture was introduced into the biaxial extruder, kneaded, and extruded. The extruded mixture passed through the T-die and the cooling cast roll to be molded into a sheet, and then, was stretched biaxially by the tenter-type simultaneous stretching machine for the MD stretching followed by the TD stretching. From the stretched sheet, the liquid paraffin oil was extracted using methylene chloride, and the sheet was thermally secured at 128 °C to produce the porous polymer substrate (thickness of 9 µm).

### < Example 6>

A polyolefin substrate (thickness of 9 µm) was produced in the same manner as in Example 5, except that a polyolefin resin (copolymer including ethylene and propylene at a weight ratio of 93:7) and liquid paraffin oil were mixed at a weight ratio of 3:7, and 5 wt% of polypropylene was added based on the total weight of the polyolefin resin.

### < Example 7>

A polyolefin substrate (thickness of 9 µm) was produced in the same manner as in Example 5, except that a polyolefin resin (copolymer including ethylene and propylene at a weight ratio of 85:15) and liquid paraffin oil were mixed at a weight ratio of 3:7, and 2 wt% of polypropylene was added based on the total weight of the polyolefin resin.

### < Example 8>

A polyolefin substrate (thickness of 9 µm) was produced in the same manner as in Example 5, except that a polyolefin resin (copolymer including ethylene and propylene at a weight ratio of 85:15) and liquid paraffin oil were mixed at a weight ratio of 3:7, and 3.5 wt% of polypropylene was added based on the total weight of the polyolefin resin.

### < Comparative Example 5>

A polyolefin substrate (thickness of 9 µm) was produced in the same manner as in Example 5, except that a polyolefin resin (copolymer including ethylene and propylene at a weight ratio of 70:30) and liquid paraffin oil were mixed at a weight ratio of 3:7, and 5 wt% of polypropylene was added based on the total weight of the polyolefin resin.

### < Comparative Example 6>

A polyolefin substrate (thickness of 9 µm) was produced in the same manner as in Example 5, except that a polyolefin resin (copolymer including ethylene and propylene at a weight ratio of 85:15) and liquid paraffin oil were mixed at a weight ratio of 3:7, and 7 wt% of polypropylene was added based on the total weight of the polyolefin resin.

### <Experimental Example 2: Verification of Content of Non-Crystalline Polymer Resin in Polyolefin Substrate>

The content of the non-crystalline polyolefin polymer resin in the polyolefin substrate of each of the Examples and the Comparative Examples was verified using the TREF apparatus of Polymer Char. For example, 40 mg of the polyolefin substrate was dissolved in 20 mL of a trichlorobenzene solvent at 150 °C for 120 minutes, and then, stabilized at 100 °C for 45 minutes. The substrate was introduced into the TREF column, cooled to 35 °C at a constant rate of 0.5 °C/min, and then, maintained for 15 minutes. Then, the substrate was heated from 35 °C to 80 °C at a constant rate of 20 °C/min while being maintained for 20 minutes per 5 °C increment, and further heated from 80 °C to 120 °C at a constant rate of 20 °C/min while being maintained for 20 minutes per 2 °C increment. Thereafter, while flowing a trichlorobenzene solvent in the column at a flow rate of 0.5 mL/min, the weight of the eluted fraction was measured at 35 °C, which is shown in Tables 2 and 3 below.

Further, the average number of CH₃ per 1,000 carbon atoms was verified using the IR detector included in the apparatus above, which is shown in Tables 2 and 3 below.

### <Experimental Example 3: Verification of Compression Resistance Based on Content of Non-Crystalline Polymer Resin in Polyolefin Substrate>

For the polyolefin substrate of each of Examples 5 and 6 and Comparative Example 5, the air permeability before compression was verified by measuring the passage time of 100 cc of air through a sample with a size of 1 in² under a constant water pressure of 4.8 inches at room temperature using the EG01-55-1MR equipment of Asahi Seico.

After the polyolefin substrate was placed in the press machine and pressed with a pressure of 8 MPa at 70 °C for 10 seconds, the air permeability after compression was measured in the same way as described above using the same equipment.

Based on the air permeability of the substratae before and after compression, the air permeability increase rate was calculated according to Equation 2 above, which is shown in Table 2 below.

**[Table 2]**

| | Content of Non-Crystalline Resin (wt%) | Average Number of CH₃/1,000 TC | Air Permeability of Substrate before Pressing (s/100 cc) | Air Permeability of Substrate after Pressing (s/100 cc) | Air Permeability Increase Rate (%) |
|---|---|---|---|---|---|
| Example 5 | 2 | 440 | 70 | 91 | 30 |
| Example 6 | 13 | 440 | 70 | 118 | 68 |
| Comparative Example 5 | 41 | 440 | 70 | 325 | 364 |

As seen in Table 2 above, it is verified that while Comparative Example 5 exhibits the air permeability increase rate of 364 %, Examples 5 and 6 exhibit the air permeability increase rates of 30 % and 68 %, respectively.

### <Experimental Example 4: Verification of Compression Resistance of Polyolefin Substrate Based on Average Short Chain Branches>

For the polyolefin substrate of each of Examples 7 and 8 and Comparative Example 6, the air permeability before and after compression was measured in the same manner as in Experimental Example 3.

Based on the air permeability of the substrate before and after compression, the air permeability increase rate was calculated according to Equation 2 above, which is shown in Table 3 below.

**[Table 3]**

| | Content of Non-Crystalline Resin (wt%) | Average Number of CH₃/1,000 TC | Air Permeability of Substrate before Pressing (s/100 cc) | Air Permeability of Substrate after Pressing (s/100 cc) | Air Permeability Increase Rate (%) |
|---|---|---|---|---|---|
| Example 7 | 28 | 240 | 70 | 89 | 27 |
| Example 8 | 28 | 380 | 70 | 173 | 147 |
| Comparative Example 6 | 28 | 630 | 70 | 211 | 201 |

As seen in Table 3 above, it is verified that while Comparative Example 6 exhibits the air permeability increase rate of 201 %, Examples 7 and 8 exhibit the air permeability increase rates of 27 % and 147 %, respectively.

### < Example 9>

30 parts by weight of the polymer resin (polyethylene resin, Mw: 1,500,000), and 70 parts by weight of liquid paraffin oil (kinematic viscosity at 40 °C: 40 cSt) were introduced into the biaxial extruder, kneaded, and then, extruded. The extruded mixture passed through the T-die and the cooling cast roll to be molded into a sheet, and then, was stretched biaxially by the tenter-type simultaneous stretching machine for the MD stretching followed by the TD stretching. From the stretched sheet, the liquid paraffin oil used as a diluent was extracted using methylene chloride, and the sheet was thermally secured at 128 °C to produce the porous polymer substrate.

For the porous polymer substrate, the weight ratio of the eluate eluted at 98 °C was calculated using the TREF apparatus of Polymer Char. For example, 40 mg of a sample was prepared for the porous polymer substrate, dissolved in 20 mL of a trichlorobenzene solvent at 150 °C for 120 minutes, and then, stabilized at 100 °C for 45 minutes. Then, the sample was introduced into the TREF column, cooled to 35 °C at a cooling rate of 0.5 °C/min, and maintained for 15 minutes. Then, the sample was heated from 35 °C to 80 °C at a constant rate of 20 °C/min while being maintained for 20 minutes per 5 °C increment, and further heated from 80 °C to 120 °C at a constant rate of 20 °C/min while being maintained for 20 minutes per 2 °C increment. Thereafter, while flowing a trichlorobenzene solvent in the column at a flow rate of 0.5 mL/min, the weight of the polymer sample eluted at 98 °C was measured, and the content of the crystalline polymer resin in the porous polymer substrate was 72 wt%.

### <Example 10>

The porous polymer substrate was produced in the same manner as in Example 9, except that the content of the crystalline polymer resin in the porous polymer substrate was 83 wt%.

### <Comparative Example 7>

The porous polymer substrate was produced in the same manner as in Example 9, except that 7 parts by weight of polypropylene (Mw: 350,000) based on 100 parts by weight of polyethylene (Mw: 600,000) was added to prepare the polymer resin (Mw: 580,000), and the content of the crystalline polymer resin in the porous polymer substrate was 66 % by weight.

### <Comparative Example 8>

The porous polymer substrate was produced in the same manner as in Example 9, except that 0.5 parts by weight of polypropylene (Mw: 350,000) based on 100 parts by weight of polyethylene (Mw: 600,000) was added to prepare the polymer resin (Mw: 600,000), and the content of the crystalline polymer resin in the porous polymer substrate was 90 % by weight.

### <Experimental Example 5: Measurement of Indentation Depth and Standard Deviation>

Using a nanoindenter (Fischerscope, HM2000), the porous polymeric substrate was indented with a Vickers indenter (0.5 µm wide at the tip) with a force of 100 nN, and then, the indentation depth was measured by an atomic force microscope (AFM).

For the surface of the porous polymer substrate of each of Examples 9 and 10 and Comparative Examples 7 and 8, the Dimension Icon (Bruker) was set to the conditions set forth below, and then, a peak tapping force was measured while moving the tip on the surface of each sample as illustrated in FIG. 1, and the depth of the tip penetrating the surface of the sample was measured using the atomic force microscope (AFM; OSTESPA-R3, Bruker, f=300 kHz, k=26 N/m) at the time of measuring the peak tapping force.
- Mode: Tapping (Peak Force QNM)
- Scan speed: 0.3 Hz
- Peak force setpoint: 100 nN, Amplitude: 300 nm
- Scan angle: 90 °

### <Experimental Example 6: Measurement of Insulation Breakdown Voltage>

For Examples 9 and 10 and Comparative Examples 7 and 8 having the thickness of 12 µm, the pressure of 8 MPa was applied at 70 °C, and then the voltage was measured when current exceeded 0.5 mA for 3 seconds while increasing the voltage at a rate of 100 mV/s.

**[Table 4]**

| | Indentation Depth (nm) | Standard Deviation of Indentation Depth (nm) | Insulation Breakdown Voltage after Compression (V) |
|---|---|---|---|
| Example 9 | 16.2 | 3.1 | 1,690 |
| Example 10 | 10.7 | 1.1 | 2,687 |
| Comparative Example 7 | 23.3 | 3.8 | 934 |
| Comparative Example 8 | 12.3 | 8.6 | 801 |

From Table 4 above, it is verified that in Examples 9 and 10, the crystalline polymer resin is included in the porous polymer substrate in an appropriate content, which is a reference value or more, so that the indentation depth is relatively low, and the standard deviation of the indentation depth is reduced, which increases the insulation breakdown voltage after compression.

Meanwhile, it is verified that in Comparative Example 7, the crystalline polymer resin is included in the small amount of 66 wt% in the porous polymer substrate, so that the indentation depth steeply increases, and consequently, the insulation breakdown voltage after compression increases relatively less with 1,000 V or lower, and in Comparative Example 8, the crystalline polymer resin is included in the large amount of 90 wt% in the porous polymer substrate, so that the standard deviation of the indentation depth increases, and consequently, the insulation breakdown voltage after compression also increases relatively less with 1,000 V or lower.

Thus, the separator for the electrochemical device according to an embodiment of the present disclosure may adjust the content of the crystalline polymer resin in the porous polymer substrate to adjust the intention depth and the standard deviation thereof, which may improve the insulation breakdown voltage after the lamination.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A separator for an electrochemical device, the separator comprising:
a porous polymer substrate,
wherein the porous polymer substrate includes a non-crystalline polymer resin and a crystalline polymer resin, and
an eluate eluted from the porous polymer substrate through a temperature rising elution fractionation (TREF) method has a weight-average molecular weight (Mw) of 100,000 or more.

2. The separator for the electrochemical device according to claim 1, wherein the porous polymer substrate includes 40 wt% or less of a fraction eluted at a temperature of 35 °C or lower by the TREF method.

3. The separator for the electrochemical device according to claim 1, wherein a content of the non-crystalline polymer resin in the porous polymer substrate is 40 wt% or less.

4. The separator for the electrochemical device according to claim 1, wherein a content of the crystalline polymer resin in the porous polymer substrate is 60 wt% or more.

5. The separator for the electrochemical device according to claim 1, wherein a weight ratio of the non-crystalline polymer resin and the crystalline polymer resin in the porous polymer substrate is 1:1 to 10:1.

6. The separator for the electrochemical device according to claim 1, wherein a deviation of an indentation depth of the porous polymer substrate is -5 nm to 5 nm.

7. The separator for the electrochemical device according to claim 1, wherein the porous polymer substrate includes a polyolefin-based resin,
the non-crystalline polymer resin is a non-crystalline polyolefin-based resin, and
the crystalline polymer resin is a crystalline polyolefin-based resin.

8. The separator for the electrochemical device according to claim 7, wherein the polyolefin-based resin is one selected from the group consisting of polyethylene; polypropylene; polybutylene; polypentene: polyhexene: polyoctene; at least one copolymer of ethylene, propylene, butene, pentene, 4-methylpentene, hexene, and octene; and combinations thereof.

9. The separator for the electrochemical device according to claim 7, wherein the polyolefin-based resin has 500 or less of average short chain branches (SCB) per total 1,000 carbon atoms.

10. The separator for the electrochemical device according to claim 7, wherein a melting index (ASTM D1238, 190 °C, 2.16 kg) of the polyolefin-based resin is 0.1 g/10 min to 0.3 g/10 min.

11. The separator for the electrochemical device according to claim 1, wherein a weight-average molecular weight (Mw) of the porous polymer substrate is 500,000 to 3,000,000.

12. The separator for the electrochemical device according to claim 1, wherein a polydispersity index (PDI) of the eluate is 5 or more.

13. The separator for the electrochemical device according to claim 1, wherein when a pressure of 8 MPa is applied at 70 °C, at least one of conditions (i) to (iii) set forth below is satisfied:
(i) a thickness reduction rate of the porous polymer substrate, defined by Equation 1 below, is 10 % or less: [Equation 1] Thickness reduction rate (%)=(thickness of porous polymer substrate before application of pressure-thickness of porous polymer substrate after application of pressure)/thickness of porous polymer substrate before application of pressure × 100;
(ii) an air permeability increase rate of the porous polymer substrate after compression, defined by Equation 2 below, is 185 % or less: Air permeability increase rate (%)=(air permeability after compression-air permeability before compression)/(air permeability before compression) × 100; and
(iii) an insulation breakdown voltage of the porous polymer substrate is 1,000 V or more.

14. The separator for the electrochemical device according to claim 1, wherein the porous polymer substrate has a thickness of 1 µm to 30 µm.

15. An electrochemical device comprising:
a positive electrode;
a negative electrode; and
the separator according to claim 1, the separator being interposed between the positive electrode and the negative electrode.
